# EUROPEAN PATENT SPECIFICATION

(11) **EP 0 707 559 B1**
(45) Date of publication and mention of the grant of the patent: **30.07.1997**
(21) Application number: 94917574.9
(22) Date of filing: 01.06.1994
(51) Int. Cl.: C05F 17/00, C05F 17/02

(54) **PLANT AND PROCESS FOR COMPOSTING ORGANIC MATERIAL**
VERFAHREN UND ANLAGE ZUM KOMPOSTIEREN VON ORGANISCHEN STOFFEN
INSTALLATION ET PROCEDE DE COMPOSTAGE DE MATIERES ORGANIQUES

(30) Priority: 01.06.1993 DK 625/93
(43) Date of publication of application: 24.04.1996
(73) Proprietor: I. KRÜGER SYSTEMS A/S, DK-2860 Soborg (DK)
(72) Inventor: JORGENSEN, Lars, Vedel, DK-3660 Stenlose (DK); NIELSEN, Lars, Krogsgaard, DK-3500 Vaerlose (DK)
(74) Representative: Kyed, Iver
(86) International application number: DK9400213
(87) International publication number: WO9427931

(56) References cited:
- CH-A- 587 202
- DE-A- 2 540 515
- DE-A- 3 923 641
- DE-A- 4 208 390

## Description

The present invention relates to a plant for composting organic material, preferably organic waste material, which plant comprises a number of material zones comprising a number of initial zones, a number of intermediate zones and a number of final zones, and wherein material is subjected to a successive treatment, means for introducing the material into one or more of the initial zones, means for conveying the material from one material zone to another through the plant, means for removing the composted material from one or more of the final zones, means for aerating the material by drawing or blowing air through it and means for recirculating discharge air from a portion of the material to another portion thereof.

FR-A-2,323,641 discloses a plant for treating household refuse comprising a tubular and rotating treatment chamber through which the refuse is continuously conveyed and an aeration pipe system by which discharge air from the end of the treatment chamber at which treated refuse is removed can be recirculated to a zone located in the middle of the chamber, and by which fresh air, steam and oxygen can be supplied to said zone together with the recirculated discharge air.

The temperature, the air humidity and the extent of aeration in the intermediate zone are adjusted to desired levels by means of the aeration pipe system.

The article "The tunnel reactor the flexible in-vessel composting system" by John R. O'Brien, published at "The 16th national conference of municipal treatment plant sludge management", Orlando, Florida, U.S.A. on May 29, 1986 discloses a plant for the continuous composting of organic material and comprising a closed tank through which the organic material is continuously conveyed and which is divided into a number of zones.

Aeration of the prior art plant is effected by blowing in fresh air through the bottom of the two initial zones and the final zone in the direction of conveyance of the organic material while drawing air through the bottom of the intermediate zones, thereby causing air to flow from the said initial zones and final zone to the intermediate zones partly by passage through the organic material and partly by recirculation through a hollow space located between the upper side of the organic material and the tank lid.

A pamphlet by the two companies "Austrian Energy & Environment SGP/Waagner-Biró GmbH" and "Koch Environmental Technology GmbH" discloses a composting plant comprising a tank for receiving the material to be composted and a composting hall for the further treatment of material transferred from the receiving tank and comprising three separate heaps of material, wherein a successive treatment of the material is effected.

In the prior art plant aeration is effected by heating a portion of the discharge air from the receiving tank in a heat exchanger and conveying it down through the first heap and subsequently through two further heat exchangers and up through the last heap, and conveying the remaining portion of the discharge air from the receiving tank up through the second heap. The discharge air from the hall is conveyed through a scrubber and then a biofilter for the odour purification thereof.

By conveying the discharge air from the first heap through the last heap a reduction in the contents of odour polluting substances of the air is obtained.

The object of the present invention is to provide an improved plant of the type mentioned in the preamble to claim 1.

This object is obtained according to the invention with a plant which is characterized in that each intermediate and final zone are in communication with separate air discharge ducts, each initial zone is in communication with a separate air supply duct, and that the plant comprises means for conveying fresh air through one or more of the intermediate zones, means for conveying at least a portion of the discharge air from the intermediate zones through one or more of the initial zones for the heating thereof, means for conveying discharge air from the intermediate zones and first zones through one or more of the final zones for the odour purification thereof, and means for conducting discharge air from the final zones away from the plant.

The invention is based on the discovery that a rapid and efficient heating of the material to a desired process temperature can be obtained by conveying discharge air from the intermediate zones, in which the material decomposes most rapidly and in which the temperature is highest, through the inital zones into which untreated and unheated material is introduced. Thus, the efficiency of the process expressed as composting process rate per reactor volume unit can be increased significantly.

Furthermore, the discharge air from the intermediate zones contains water vapour, and by conveying discharge air from the intermediate zones through the initial zones a possibility is thus provided for humidifying the untreated material introduced into the initial zones, when desired. Such a humidification of the material in the initial zones as well as the heating thereof serves to increase the efficiency of the process.

A plant of the type stated in the preamble to claim 1 ordinarily comprises an external system for the odour purification of the discharge air from the composting plant prior to the discharge of the discharge air to the environment. Such an odour purification system may e.g have the form of a biofilter having compost material as a filler.

Thus, the invention is furthermore based on the discovery that it is possible to use the organic material present in the final zones, said material being converted completely or almost completely into compost, as a biofilter for the odour purification of the discharge air from the plant, and hence that an external odour purification system can be omitted provided that all process air leaving the plant is conveyed through the final zones.

In the operation of a conventional external biofilter it is necessary to shut down the filter at intervals in order to replace and/or regenerate the compost filler material.

Compared to an external biofilter use of the final zones as a odour purification biofilter presents the further advantage that such shut downs of the biofilter can be avoided, as the compost material in the final zones will be replaced continuously during the operation of the plant.

The invention presents the further advantage that as a result of the division of the plant into zones connected to separate common air supply and air discharge ducts it is possible to establish different operating. conditions, such as air flow rate, water content, temperature, oxygen concentration and air humidity, in different zones, thereby providing a possibility for increasing the efficiency of the composting process considerably.

The decomposition of the material into compost is effected under the influence of a number of different micro-organism cultures. As the material gradually decomposes during the conveyance through the tank, the composition of the material changes and the composition of the micro-organism flora is changed concurrently.

As mentioned above the plant according to the invention provides a possibility for controlling the operating conditions in the tank depending on the direction of conveyance of the material and hence for optimizing the operating conditions for the micro-organism flora present in the respective zones, and as a result thereof the efficiency of the process is increased.

A preferred embodiment of the plant according to the invention is characterized in that the plant further comprises means for mixing discharge air from the intermediate and/or initial zones with fresh air and conveying at least a portion of the resulting mixture through one or more of the intermediate zones.

In using this embodiment of the invention it can be avoided that cold fresh air is conveyed directly into the intermediate zones, having the result that the material present at the air supply end of said zones is cooled to a temperature below the desired operating temperature.

The plant according to the invention preferably comprises from 1 to 3 initial zones and from 1 to 3 final zones.

Furthermore, the plant according to the invention preferably comprises from 1 to 6 intermediate zones.

The material zones may be located in two or more tanks, optionally in separate tanks.

However, a particularly preferred embodiment of the invention is characterized in that the plant comprises a tank containing all material zones.

In the following the invention will be described in further detail in relation to the above mentioned particularly preferred embodiment.

The tank in the plant according to the invention is preferably box-shaped and stationary.

In a preferrred embodiment of the invention the tank comprises a double bottom having an inner perforated plate on which the organic material rests and partitions for forming a bottom chamber vis-a-vis each material zone, which bottom chambers are in communication with the air supply or air discharge duct.

A double bottom of the above mentioned type allows a uniform air flow to be obtained across the entire cross sectional area of each zone.

A preferred embodiment of the invention is characterized in that the tank comprises an air mixing zone which is in open communication with all material zones and into which fresh air is introduced, from which air is conveyed through the intermediate zones, to which discharge air from the intermediate zones is recirculated, into which discharge air from the initial zones is conveyed, and from which air is conveyed through the final zones.

In an alternative embodiment of the invention the tank comprises a double lid having an inner perforated plate and partitions for forming a lid chamber vis-a-vis each zone, which lid chambers are in communication with separate air supply or air discharge ducts.

Recirculation of discharge air from the intermediate zones and discharge of discharge air from the final zones are effected through the respective air discharge ducts, and supply of discharge air recirculated from the intermediate zones to the initial zones is effected through the respective air supply ducts.

Each air discharge duct from the intermediate and final zones preferably comprises a blower by which an air flow can be generated in the duct and by which process air can be conveyed through the zone connected with the duct by suction.

The air flow in the supply ducts to the initial zones and air passage in the initial zones are preferably generated by the blower or the blowers located in the discharge duct of the intermediate zone or zones from which air recirculation is effected.

The air discharged from the plant is replaced by fresh air which is automatically drawn into the plant as a result of the subpressure which is generated in the plant by the discharge of air. Fresh air may be drawn through one or more openings or valves directly into the intermediate zones or into an air duct containing air recirculated from the intermediate zones or into the air mixing zone in case the plant comprises such a zone.

Optionally the tank comprises partitions between the zones in the form of semi-walls or walls having openings through which transfer of material between the zones can be effected.

Where the tank comprises an air mixing zone, the means for conveying the organic material from the inlet end of the tank to its discharge end preferably have the form of a consol forming a bridge across the tank at its upper end and which may be caused to move lengthwise the tank, and a number of rotatable screw conveyors suspended in the consol and displaceable in the longitudinal direction thereof, and which can be caused to swing transversely or longitudinally to the consol.

The above mentioned means for transferring organic material is described in detail in international publication No. WO 92/18230 included herein by this reference.

Furthermore, the means for transferring organic material may have the form of e.g. a travelling floor, a piston or a pile turnover device optionally mounted on partitions between the zones, in case the tank comprises such partitions.

During operation of the plant the temperature in the individual zones depends on and is selected with a view to the micro-organism flora desired to be established therein. The operation temperature in the individual zones varies from 30°C to 80°C. Typically temperatures of 50-60°C are used.

The temperature in the composting zones is preferably controlled by controlling the air flow therein. In the intermediate zones and the final zones the air being conveyed therethrough serves to cool the material partly by evaporating water therefrom, partly by transferring heat from the material to the air, whereas the air being conveyed through the initial zones serves to heat the material by transferring heat from the air and by releasing water condensation heat.

The temperature control is preferably effected on the basis of measurements of the temperature in the various zones and air streams and in the air mixing zone, in case the plant comprises such a zone.

If the material to be composted has a low water content, or if the material is dried out as a result of the air flow, water may be added to one or more of the zones in order to increase the composting process rate. The water may be added in the form of percolate or condensed water vapour from the air recirculation means, tap water or waste water.

In the short view, the addition of water to the material will have a cooling effect, whereas in the long view it will increase the process rate og hence the energy production and the release of energy.

The ratio of total air recirculation flow to fresh air intake is preferably of from 1 to 6, preferably of from 2.5 to 4.

When the plant is operated at a relatively high ratio of recirculated air to fresh air intake, the difference between the temperature of the process air supplied to the zones and the desired operation temperature is relatively small, and consequently the temperature variation through the zones in the direction from the air supply side to the air discharge side can be reduced, which increases the efficiency of the process.

Furthermore, the invention relates to a process for composting organic material by successive treatment in a number of material zones comprising a number of initial zones, a number of intermediate zones and a number of final zones, wherein the material is introduced into one or more of the initial zones and conveyed from one material zone to another through the plant, wherein the composted material is removed from one or more of the final zones, wherein the material is aerated by drawing or blowing air through the material, and wherein discharge air from a portion of the material is recirculated to another portion thereof.

The process according to the invention is characterized in the use of a plant in which each intermediate and final zone are in communication with separate air discharge ducts and each initial zone is in communication with a separate air supply duct and that the aeration is effected by conveying fresh air through one or more of the intermediate zones, that at least a portion of the discharge air from the intermediate zones is conveyed through one or more of the initial zones for the heating thereof, that discharge air from the intermediate and initial zones is conveyed through one or more of the final zones for the odour purification thereof, and that discharge air from the final zones is discharged from the plant.

In the following the invention will be explained in further detail with reference to the drawings wherein
- Fig. 1: is a schematic diagram of a side view of a preferred embodiment of a plant according to the invention, and
- Fig. 2: is a schematic diagram of a side view of a further preferred embodiment of a plant according the invention.

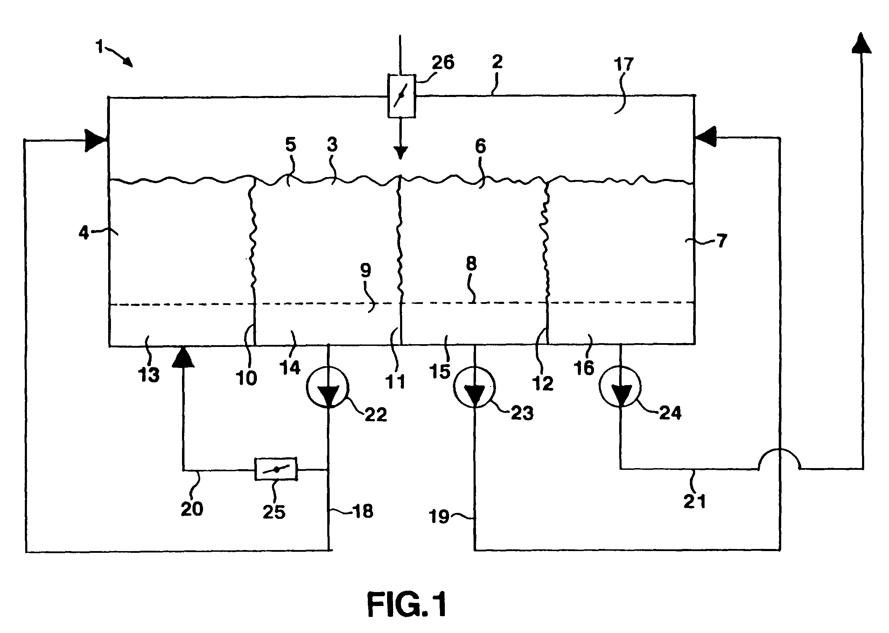

Fig. 1 shows a plant 1 comprising a tank 2 containing a layer of organic material 3 and which consists of four zones comprising an initial zone 4, two intermediate zones 5,6 and a final zone 7. The material layer 3 rests on a perforated plate 8 constituting the inner plate of a double bottom 9 which also comprises partitions 10, 11, 12 for forming bottom chambers 13, 14, 15, 16 vis-a-vis the zones 4, 5, 6, 7.

The tank 2 further comprises an air mixing zone 17 located above the material layer 3 and which is in open communication with each of the zones 4, 5, 6, 7.

The plant further comprises two ducts 18, 19 for the recirculation of discharge air from the bottom chambers 14, 15 to the mixing zone 17, a duct 20 branched off from the duct 18 for the recirculation of a portion of the discharge air from the bottom chamber 14 to the bottom chamber 13 and a duct 21 for conveying discharge air from the bottom chamber 16 out of the plant and optionally to a chimney (not shown).

Blowers 22, 23, 24 are mounted in the ducts 18, 19, 21 for the generation of an air flow in the ducts 18, 19, 21 and in the branched duct 20, and by which air is drawn from the mixing zone 17 down through the intermediate zones 5,6 and the final zone 7 and air is blown up through the initial zone 4 into the mixing zone 17.

The air flow in the duct 20 is adjusted by means of a damper 25.

A valve 26 for the intake of fresh air is located in the wall of the mixing zone 17.

In the following it is described how the control of the operation of the plant 1 is effected.

The object of the control of the plant is to maintain a desired temperature and a desired water content in the individual zones. The control is effected by changing the air flow in the zones by means of the blowers and by adding water to the zones.

Continuous and automatic measurements are made of the temperature and relative humidity in the mixing zone 17, of the temperature, air flow, relative humidity and oxygen concentration in the ducts 18, 19, 21, of the air flow in the duct 20 and of the temperature and oxygen concentration in the inside of the initial zones.

The blowers 22,23 are adjusted in such a manner that there is always a certain constant, minimum air flow through the ducts 18, 19, which is necessary for the sake of the continuous measurements in the ducts. The air flow in the ducts 18,19 is increased to a higher rate when the temperature in the ducts exceeds a pre-determined set point, or when the temperature difference between the air mixing zone 17 and the ducts 18,19 exceeds a pre-determined difference set point.

In case the temperature in the ducts 18,19 or the above mentioned temperature difference has not dropped to the respective set points after a given period, the air discharge from the final zone 7 is increased.

The water evaporation from the intermediate zones 5,6 can be calculated on the basis of measurements of the relative air humidity in the ducts 18, 19 and in the mixing zone 17 and of the air flow in the ducts 18,19, and on the basis of the calculated values of the water evaporation and optionally on the basis of determinations of the water content in the material located in the intermediate zones 5,6 effected by manual sampling, water is added to the intermediate zones 5,6 as needed.

The temperature in the initial zone 4 is controlled by conveying heated discharge air from the intermediate zone 5 through the initial zone for the heating thereof. By means of the blower 22 and the damper 25 the air flow in the duct 20 is controlled in a manner so that it is ensured that the material introduced into the initial zone 4 is heated to a given temperature set point.

On account of the measurements in the duct the blower 15 mounted in the discharge duct 21 is operated in a manner so that there is always a certain constant minimum air flow in the duct 21. The air flow in the duct 21 is increased when the temperature in the duct exceeds a pre-determined set point, or when this is required in connection with the temperature control of the intermediate zones 5,6 as explained above.

Water is added to the final zone 7 as needed, and the addition is effected in the same manner as described above for the intermediate zones 5,6.

The discharge air conveyed out of the final zone 7 is replaced by fresh air which is drawn into the air mixing zone 17 through the valve 26.

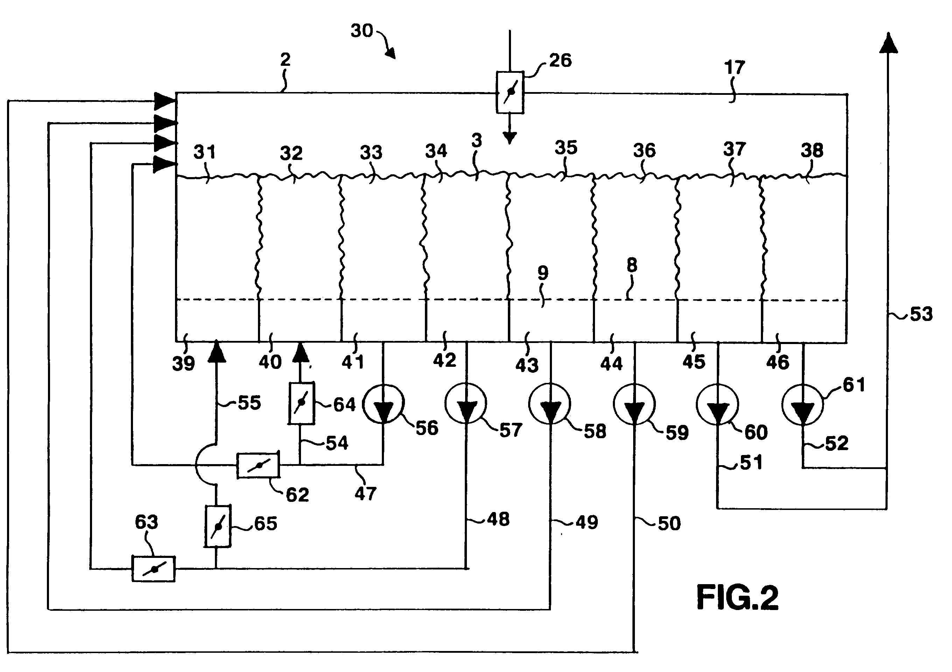

Fig. 2 shows a plant 30 comprising a tank 2 containing a layer of organic material 3 and consisting of eight zones comprising two initial zones 31,32, four intermediate zones 33,34,35,36 and two final zones 37,38. The material layer 3 rests on a perforated plate 8 which constitutes the inner plate of a double bottom 9 which further comprises seven partitions for the formation of bottom chambers 39, 40, 41, 42, 43, 44, 45, 46 vis-a-vis the zones 31, 32, 33, 34, 35, 36, 37, 38.

The tank 2 further comprises an air mixing zone 17 located above the material layer 3 and which is in open communication with each of the zones 31-38.

The plant further comprises four ducts 47, 48, 49, 50 for recirculating discharge air from the bottom chambers 41, 42, 43, 44 to the mixing zone 17 and ducts 51,52 for conveying discharge air from the bottom chambers 45,46 to a discharge duct 53.

The ducts 47, 48 comprise branched ducts 54, 55 connected to the bottom chambers 40, 39.

Blowers 56, 57, 58, 59, 60, 61 are located in the ducts 47, 48, 49, 50, 51, 52, and dampers 62, 63, 64, 65 are located in the ducts 47, 48 and in the branched ducts 54, 55 by means of which the ratio of the air flow in the main ducts to that in the connected branched ducts can be controlled.

A valve 26 is located in the wall of the mixing zone 17.

The plant 30 is controlled in the same manner as the plant 1, cf. the above description thereof.

### Example

By use of a mathematical model for a plant of the type shown in Fig. 1 computer simulations were made for a course of operation for the plant, partly under summer conditions and partly under winter conditions.

Tables 1 and 2 contain simulated table values for a number of operation parameters in the four composting zones, in the air mixing zone and for the entire plant under summer conditions and winter conditions, respectively.

The simulation of the plant operation under summer conditions is based on the assumption that the untreated organic material has a temperature of 25°C and that the fresh air has a temperature of 25°C, a relative humidity of 50% and a water content of 0.0099 kg/kg.

Similarly, the simulation of the plant operation under winter conditions is based on the assumption that the untreated organic material has a temperature of 0°C and that the fresh air has a temperature of 0°C, a relative humidity of 70% and a water content of 0.0026 kg/kg.

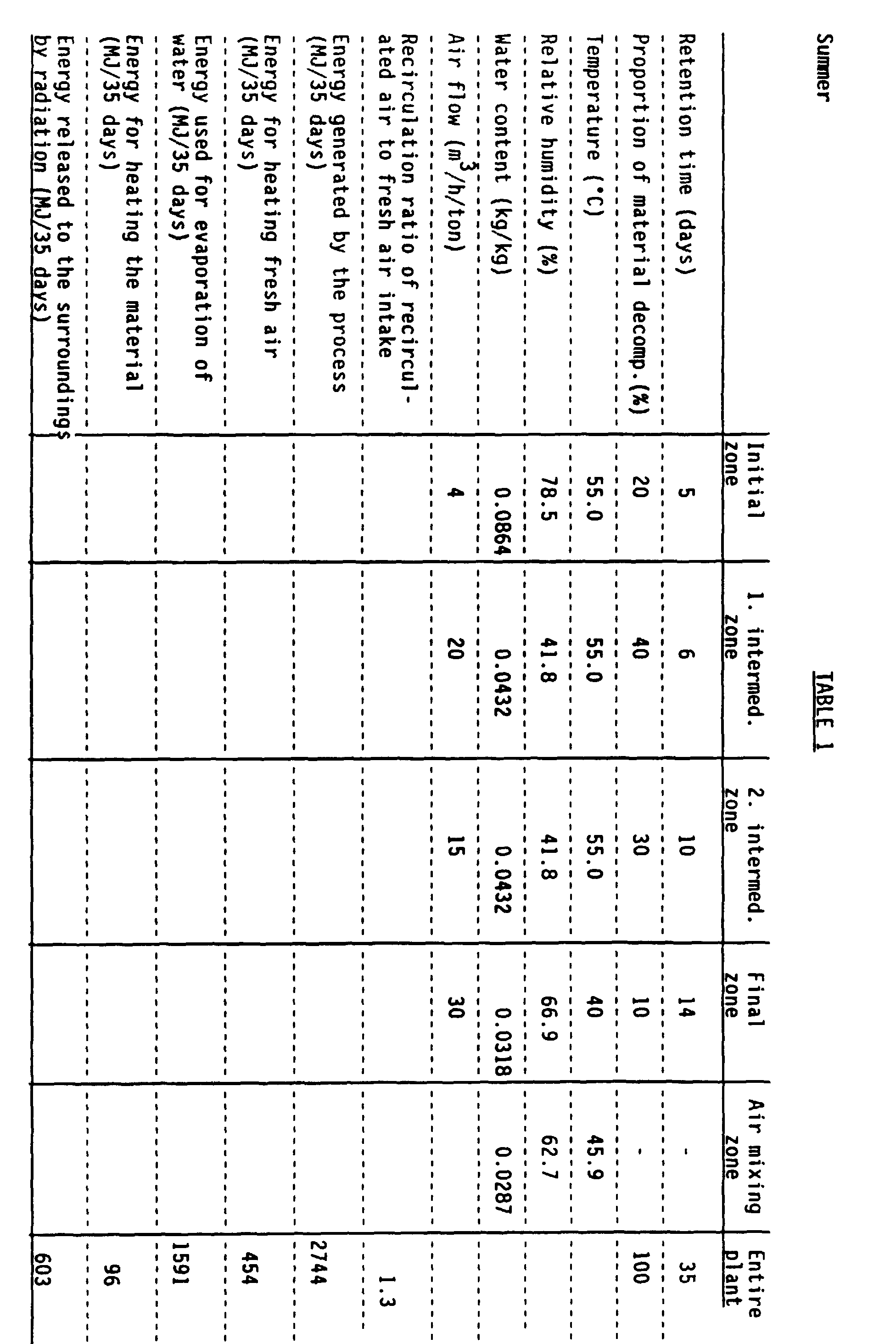

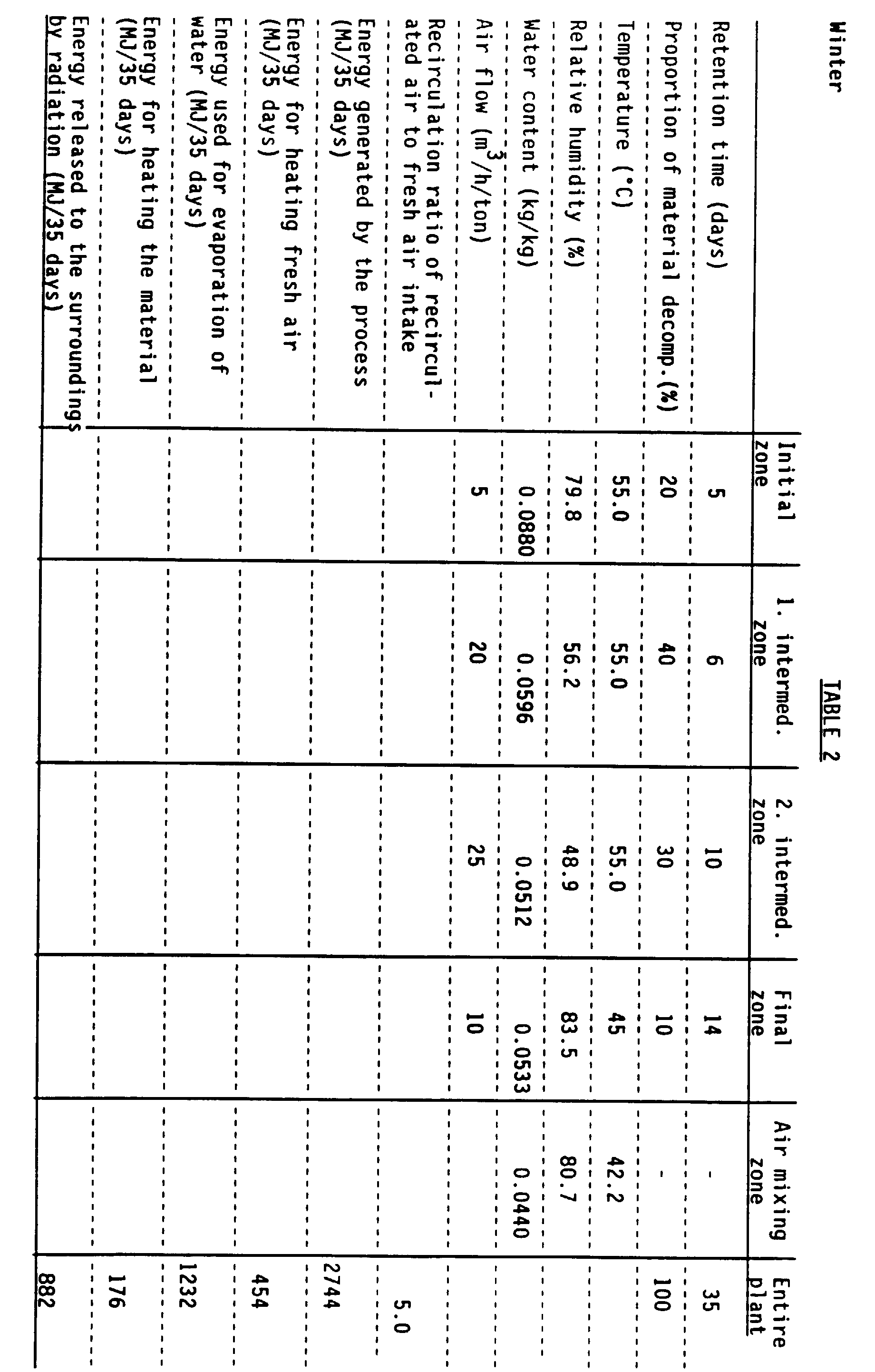

As it appears from tables 1 and 2, both under summer and winter conditions it is possible to control the aeration of the plant so that the temperature in the two intermediate zones and in the final zone is kept down at the desired operation temperature of 55°C while simultaneously allowing the untreated material introduced into the initial zone to be heated to the desired operation temperature of 55°C.

It further appears that the difference between the temperature in the air mixing zone and the desired operation temperature in the zones is relatively small, and consequently the temperature variation through the intermediate and final zones is also relatively small, and as a result thereof the efficiency of the process is increased.

## Claims

1. A plant for composting organic material (3), which plant comprises a number of material zones comprising a number of initial zones (4), a number of intermediate zones (5,6) and a number of final zones (7), and wherein the material is subjected to a successive treatment, means for introducing the material into one or more of the initial zones, means for conveying the material from one material zone to another through the plant, means for removing the composted material from one or more of the final zones, means for aerating the material by drawing or blowing air through it and means for recirculating discharge air from a portion of the material to another portion thereof, **characterized** in that each intermediate and final zone are in communication with separate air discharge ducts (18,19,21), that each initial zone is in communication with a separate air supply duct (20), and that the plant comprises means (22,23) for conveying fresh air through one or more of the intermediate zones, means (22,25) for conveying at least a portion of the discharge air from the intermediate zones through one or more of the initial zones for the heating thereof, means (24) for conveying discharge air from the intermediate and initial zones through one or more of the final zones for the odour purification thereof, and means (24) for conveying discharge air from the final zones out of the plant.

2. A plant according to claim 1, **characterized** in that it further comprises means (17) for mixing discharge air from the intermediate and/or initial zones (5,6;4) with the fresh air and conveying at least a portion of the resulting mixture through one or more intermediate zones.

3. A plant according to claim 1 or 2, **characterized** in that it comprises from 1 to 3 initial zones (4) and from 1 to 3 final zones (7).

4. A plant according to any of the preceding claims, **characterized** in that it comprises from 1 to 6 intermediate zones (5,6).

5. A plant according to any of the preceding claims, **characterized** in that it comprises a tank (2) containing all material zones.

6. A plant according to claim 5, **characterized** in that the tank is box-shaped and stationary.

7. A plant according to claim 5 or 6, **characterized** in that the tank (2) comprises a double bottom (9) having an inner perforated plate (8) on which the organic material (3) rests and partitions (10,11,12) for forming a bottom chamber (13,14,15,16) vis-a-vis each material zone (4,5,6,7), which bottom chambers are in communication with the air supply or air discharge duct (20;18,19,21).

8. A plant according to any of the claims 5-7, **characterized** in that the tank (2) comprises an air mixing zone (17) which is in open communication with all material zones (4,5,6,7) and into which the fresh air is introduced, from which air is conveyed through the intermediate zones (5,6), to which discharge air from the intermediate zones is recirculated, into which the discharge air from the initial zones (4) is conveyed and from which air is conveyed through the final zones (7).

9. A process for composting organic material (3) by successive treatment in a number of material zones comprising a number of initial zones (4), a number of intermediate zones (5,6) and a number of final zones (7), wherein the material is introduced into one or more initial zones and conveyed from one material zone to another through the plant, wherein the composted material is removed from one or more of the final zones, wherein aeration of the material is effected by drawing or blowing air through the material and wherein discharge air from a portion of the material is recirculated to another portion thereof, **characterized** in using a plant in which each intermediate and final zone are in communication with separate air discharge ducts (18,19,21) and in which each initial zone is in communication with a separate air supply duct (20) and that the aeration is effected by conveying fresh air through one or more intermediate zones, that at least a portion of the discharge air from the intermediate zones is conveyed through one or more of the initial zones for the heating thereof, that discharge air from the intermediate and initial zones is conveyed through one or more of the final zones for the odour purification thereof and that discharge air from the final zones is discharged from the plant.

## Patentansprüche

1. Anlage zur Kompostierung von organischem Material (3), wobei die Anlage folgendes umfaßt: eine Anzahl von Materialzonen, die eine Anzahl von Anfangszonen (4), eine Anzahl von Zwischenzonen (5, 6) und eine Anzahl von Endzonen (7) umfassen, und in denen das Material einer aufeinanderfolgenden Behandlung unterzogen wird, Mittel zum Einführen des Materials in eine oder mehrere der Anfangszonen, Mittel zum Befördern des Materials von einer Materialzone zu einer anderen Materialzone durch die Anlage, Mittel zum Entfernen des kompostierten Materials aus einer oder mehreren der Endzonen, Mittel zum Belüften des Materials durch Einsaugen oder Blasen von Luft durch dieses, und Mittel zum Zurückführen von Abluft aus einem Teil des Materials zu einem anderen Teil davon, **dadurch gekennzeichnet,** daß jede der Zwischenzonen und der Endzonen mit separaten Luftauslaßleitungen (18, 19, 21) in Verbindung steht, daß jede Anfangszone in Verbindung mit einer separaten Luftzufuhrleitung (20) steht, und daß die Anlage Mittel (22, 23) zum Befördern von Frischluft durch eine oder mehrere der Zwischenzonen, Mittel (22, 25) zum Befördern von mindestens einem Teil der Abluft aus den Zwischenzonen durch eine oder mehrere der Anfangszonen zu deren Erwärmung, Mittel (24) zum Befördern von Abluft aus den Zwischen- und Anfangszonen durch eine oder mehrere der Endzonen zu deren Geruchsreinigung, und Mittel (24) zum Befördern von Abluft aus den Endzonen aus der Anlage heraus umfaßt.

2. Anlage nach Anspruch 1, **dadurch gekennzeichnet,** daß sie außerdem Mittel (17) zum Mischen von Abluft aus den Zwischenzonen und/oder Anfangszonen (5, 6; 4) mit Frischluft und zum Befördern mindestens eines Teils der sich ergebenden Mischung durch eine oder mehrere der Zwischenzonen umfaßt.

3. Anlage nach Anspruch 1 oder 2, **dadurch gekennzeichnet,** daß sie eine bis drei Anfangszonen (4) und eine bis drei Endzonen (7) umfaßt.

4. Anlage nach einem der vorhergehenden Ansprüche, **dadurch gekennzeichnet,** daß sie eine bis sechs Zwischenzonen (5, 6) umfaßt.

5. Anlage nach einem der vorhergehenden Ansprüche, **dadurch gekennzeichnet,** daß sie einen Tank (2) umfaßt, der alle Materialzonen beinhaltet.

6. Anlage nach Anspruch 5, **dadurch gekennzeichnet,** daß der Tank kastenförmig und ortsfest ist.

7. Anlage nach Anspruch 5 oder 6, **dadurch gekennzeichnet,** daß der Tank (2) einen Doppelboden (9) umfaßt, der eine innere perforierte Platte (8), auf der das organische Material (3) ruht, und Trennwände (10, 11, 12) besitzt, um eine Bodenkammer (13, 14, 15, 16) gegenüber jeder Materialzone (4, 5, 6, 7) zu bilden, wobei diese Bodenkammern mit der Luftzufuhrleitung bzw. der Luftauslaßleitung (20; 18, 19, 21) in Verbindung stehen.

8. Anlage nach einem der Ansprüche 5-7, **dadurch gekennzeichnet,** daß der Tank (2) eine Luftmischzone (17) umfaßt, die in einer offenen Verbindung mit allen Materialzonen (4, 5, 6, 7) steht, und in die die Frischluft eingeleitet wird, aus der Luft durch die Zwischenzonen (5, 6) befördert wird, in die die Abluft von den Zwischenzonen zurückgeführt wird, in die die Abluft aus den Anfangszonen (4) befördert wird und aus der Luft durch die Endzonen (7) befördert wird.

9. Verfahren zur Kompostierung von organischem Material (3) durch eine aufeinanderfolgende Behandlung in einer Vielzahl von Materialzonen, die eine Anzahl von Anfangszonen (4), eine Anzahl von Zwischenzonen (5, 6) und eine Anzahl von Endzonen (7) umfassen, bei dem das Material in eine oder mehrere Anfangszonen eingeführt wird und von einer Materialzone zu einer anderen Materialzone durch die Anlage befördert wird, bei dem das kompostierte Material aus einer oder mehreren der Endzonen entfernt wird, bei dem die Belüftung des Materials durch Einsaugen oder Blasen von Luft durch das Material erreicht wird, und bei dem die Abluft aus einem Teil des Materials zu einem anderen Teil davon zurückgeführt wird, **dadurch gekennzeichnet,** daß eine Anlage verwendet wird, in der jede Zwischenzone und jede Endzone mit separaten Luftauslaßleitungen (18, 19, 21) in Verbindung stehen und in der jede Anfangszone in Verbindung mit einer separaten Luftzufuhrleitung (20) steht, und daß die Belüftung durch Befördern von Frischluft durch eine oder mehrere der Zwischenzonen bewirkt wird, daß mindestens ein Teil der Abluft von den Zwischenzonen durch eine oder mehrere der Anfangszonen zu deren Erwärmung befördert wird, daß die Abluft von den Zwischenzonen und den Anfangszonen durch eine oder mehrere der Endzonen zu deren Geruchsreinigung befördert wird, und daß die Abluft von den Endzonen aus der Anlage herausgelassen wird.

## Revendications

1. Une installation de compostage de matière organique (3), cette installation comportant un certain nombre de zones de matière comprenant un certain nombre de zones initiales (4), un certain nombre de zones intermédiaires (5, 6) et un certain nombre de zones finales (7), dans laquelle la matière est soumise à un traitement successif, des moyens pour introduire la matière dans l'une ou plus d'une des zones initiales, des moyens pour transporter la matière d'une zone de matière à une autre à travers l'installation, des moyens pour extraire la matière compostée de l'une ou plus d'une des zones finales, des moyens pour aérer la matière en aspirant ou en soufflant de l'air à travers celle-ci, et des moyens pour faire recirculer l'air de sortie provenant d'une partie de la matière à une autre partie de celle-ci, **caractérisée** en ce que chaque zone intermédiaire et chaque zone finale sont en communication avec des conduites séparées de sortie d'air (18, 19, 21), en ce que chaque zone initiale est en communication avec une conduite séparée d'alimentation en air (20), et en ce que l'installation comporte des moyens (22, 23) pour transporter de l'air frais à travers l'une ou plus d'une des zones intermédiaires, des moyens (22, 25) pour transporter au moins une partie de l'air de sortie provenant des zones intermédiaires à travers l'une ou plus d'une des zones initiales pour le chauffage de celles-ci, des moyens (24) pour transporter l'air de sortie provenant des zones intermédiaires et initales à travers l'une ou plus d'une des zones finales pour la purification d'odeurs de celles-ci, et des moyens (24) pour transporter l'air de sortie provenant des zones finales à l'extérieur de l'installation.

2. Une installation selon la revendication 1, **caractérisée** en ce qu'elle comporte au surplus des moyens (17) pour mélanger l'air de sortie provenant des zones intermédiaires et/ou initiales (5, 6 ; 4) avec l'air frais et pour transporter au moins une partie du mélange résultant à travers une ou plus d'une zone intermédiaire.

3. Une installation selon la revendication 1 ou 2, **caractérisée** en ce qu'elle comporte de 1 à 3 zones initiales (4) et de 1 à 3 zones finales (7).

4. Une installation selon l'une quelconque des revendications précédentes, **caractérisée** en ce qu'elle comporte de 1 à 6 zones intermédiaires (5, 6).

5. Une installation selon l'une quelconque des revendication précédentes, **caractérisée** en ce qu'elle comporte un réservoir (2) contenant toutes les zones de matière.

6. Une installation selon la revendication 5, **caractérisée** en ce que le réservoir est en forme de boîte et fixe.

7. Une installation selon la revendication 5 ou 6, **caractérisée** en ce que le réservoir (2) comporte un double fond (9) présentant une plaque perforée intérieure (8) sur laquelle repose la matière organique (3) et des cloisons (10, 11, 12) pour former une chambre de fond (13, 14, 15, 16) en regard de chaque zone de matière (4, 5, 6, 7), ces chambres de fond étant en communication avec la conduite d'alimentation en air ou de sortie d'air (20 ; 18, 19, 21).

8. Une installation selon l'une quelconque des revendications 5-7, **caractérisée** en ce que le réservoir (2) comporte une zone de mélange d'air (17) qui est en communication ouverte avec toutes les zones de matière (4, 5, 6, 7), dans laquelle l'air frais est introduit, à partir de laquelle l'air est transporté à travers les zones intermédiaires (5, 6), vers laquelle l'air de sortie provenant des zones intermédiaires est recirculé, dans laquelle l'air de sortie provenant des zones initiales (4) est transporté et à partir de laquelle l'air est transporté à travers les zones finales (7).

9. Un procédé de compostage de matière organique (3) par traitement successif dans un certain nombre de zones de matière, comportant un certain nombre de zones initiales (4), un certain nombre de zones intermédiaires (5, 6) et un certain nombre de zones finales (7), dans lequel la matière est introduite dans une ou plus d'une zone initiale et transportée d'une zone de matière à une autre à travers l'installation, dans lequel la matière compostée est extraite à partir de l'une ou plus d'une des zones finales, dans lequel l'aération de la matière est effectuée en aspirant ou en soufflant de l'air à travers la matière et dans lequel l'air de sortie provenant d'une partie de la matière est recirculé vers une autre partie de celle-ci, **caractérisé** par l'utilisation d'une installation dans laquelle chaque zone intermédiaire et chaque zone finale sont en communication avec des conduites séparées de sortie d'air (18, 19, 21) et dans laquelle chaque zone initiale est en communication avec une conduite séparée d'alimentation en air (20), et en ce que l'aération est effectuée en transportant de l'air frais à travers une ou plus d'une zone intermédiaire, en ce qu'au moins une partie de l'air de décharge provenant des zones intermédiaires est transportée à travers l'une ou plus d'une des zones initiales pour le chauffage de celle-ci, en ce que l'air de sortie provenant des zones intermédiaires et initiales est transporté à travers l'une ou plus d'une des zones finales pour la purification d'odeurs de celles-ci, et en ce que l'air de sortie provenant des zones finales est extrait de l'installation.
